# EUROPÄISCHE PATENTSCHRIFT

(11) **EP 0 463 621 B1**
(45) Veröffentlichungstag und Bekanntmachung des Hinweises auf die Patenterteilung: **19.01.2000**
(21) Anmeldenummer: 91110637.5
(22) Anmeldetag: 27.06.1991
(51) Int. Cl.: H04Q 7/18, H04B 1/16, G08B 3/10

(54) **Empfangsgerät für digitale Funksignale**
Receiver for digital radio signals
Récepteur pour signaux radio digitaux

(30) Priorität: 28.06.1990 CH 215290
(43) Veröffentlichungstag der Anmeldung: 02.01.1992
(73) Patentinhaber: FIRMA ERIKA KÖCHLER, CH-8833 Samstagern (CH)
(72) Erfinder: Lax, Alexander Peter, CH-8807 Freienbach (CH)
(74) Vertreter: Blum, Rudolf Emil Ernst

(56) Entgegenhaltungen:
- EP-A- 0 032 598
- EP-A- 0 198 448
- EP-A- 0 351 230
- GB-A- 2 152 719
- REVIEW OF THE ELECTRICAL COMMUNICATION LABORATORIES Bd. 35, Nr. 2, März 1987, TOKYO (JP) Seiten 109 - 114; S.YUKI ET AL: 'Design Considerations for Mobile Radio Units Used in High-Capacity Land Mobile Communications System '

## Beschreibung

Die Erfindung betrifft ein Empfangsgerät für digitale Funksignale mit einem Funkempfänger und einer damit verbundenen Datenverarbeitungsschaltung mit einem internen Taktgeber. Solche Empfangsgeräte werden insbesondere als sogenannte "Pager" eingesetzt, mittels welchen Funkrufe empfangen werden, welche an bestimmte Adressaten gerichtet sind. In der Europäischen Patentanmeldung Nr. EP-A-0 198 448 ist z.B. der Aufbau eines entsprechenden Netzes näher beschrieben. Die Empfangsgeräte besitzen knapp die Grösse einer Zigarettenpackung und können lediglich mit einer im Gehäuseinnern angeordneten Antenne versehen sein, da sie durch eine Aussenantenne unhandlich würden. Sie besitzen schaltungsmässig zwei Hauptteile, nämlich einen Funksignalempfänger für den Empfang der übermittelten Funksignale und eine Datenverarbeitungsschaltung zur Prüfung und Auswertung der empfangenen Signale. Daneben sind weiter Anzeige- und Signalgabeelemente etc. vorgesehen, die hier nicht Gegenstand des Interesses sind. Die Empfangsgeräte besitzen Batteriespeisung.

Elektrische oder elektronische Schaltungen erzeugen im Betrieb unvermeidlich elektrisches Rauschen, d.h. hochfrequente, elektromagnetische Störungen, welche sich in ihrer unmittelbaren Umgebung stark bemerkbar machen können.

Bei Empfangsgeräten der oben beschriebenen Art verursacht die Datenverarbeitungsschaltung Störungen, welche wegen der Nähe zur Antenne und zum Empfänger dessen Leistung stark negativ beeinflussen. Diese Beeinträchtigung kann mit Abschirmungen zwar gemildert, aber nicht behoben werden.

In EP-A-0 351 230 wird eine Reduktion der Störungen erreicht, indem getrennte Schaltungen zur Erkennung von Meldungen für den Empfänger und zur Auswertung der Meldungen vorgesehen sind. Die Schaltung zur Auswertung der Meldungen wird während des Empfangs der Meldungen mit reduzierter Taktrate betrieben, um die Störsignale zu vermindern. Bei dieser Lösung müssen jedoch zwei Taktgeber und eine Schaltung für deren Steuerung und Auswahl vorgesehen sein, was den Schaltungsaufwand erhöht.

Es stellt sich deshalb die Aufgabe, ein Empfangsgerät der erwähnten Art auf einfache Art so auszugestalten, dass solche Störungen auf ein Minimum reduziert werden können, so dass der Empfänger davon nicht merklich gestört wird, ohne dass dadurch Nachteile im Betrieb entstehen. Der Schaltungsaufwand gegenüber bekannten Lösungen soll reduziert werden.

Diese Aufgabe wird mit den in den Patentansprüchen genannten Massnahmen gelöst.

Die Datenverarbeitungsschaltung wird unterteilt in zwei zeitlich unabhängig arbeitende Teile oder Bereiche, von denen der erste die Verarbeitung nur gerade soweit vornimmt, dass er in der Lage ist zu entscheiden, ob die empfangenen Daten zur weiteren Auswertung zu speichern sind oder nicht. Da in diesem ersten Teil die auszuführenden Operationen auf einem Minimum gehalten werden, bleibt auch sein Störeinfluss auf ein Minimum beschränkt. Die eigentliche Verarbeitung der gespeicherten Daten erfolgt im zweiten Teil der Datenverarbeitungsschaltung, dem sogenannten Auswertungsteil, und zwar zeitverschoben, nachdem der Datenempfang beendet und der Empfänger abgeschaltet ist. Auf diese Weise können sich die Störungen, welche durch die aufwendigere Meldungsverarbeitung und Auswertung im Auswertungsteil erzeugt werden, nicht negativ auf den Empfang auswirken.

Nachfolgend wird die Erfindung anhand eines konkreten Ausführungsbeispiels näher dargestellt. Darin zeigen:
Fig. 1 ein Blockschema eines Personenrufnetzes;
Fig. 2 ein Blockdiagramm eines Empfangsgerätes mit den wichtigsten Funktionseinheiten;
Fig. 3 ein Flussdiagramm, das den zeitlichen Ablauf im Empfangsbetrieb ohne Eintreffen einer an das Gerät adressierten Meldung darstellt, und
Fig. 4 ein Flussdiagramm, das den zeitlichen Ablauf bei und nach dem Eintreffen einer an das Gerät adressierten Meldung zeigt.

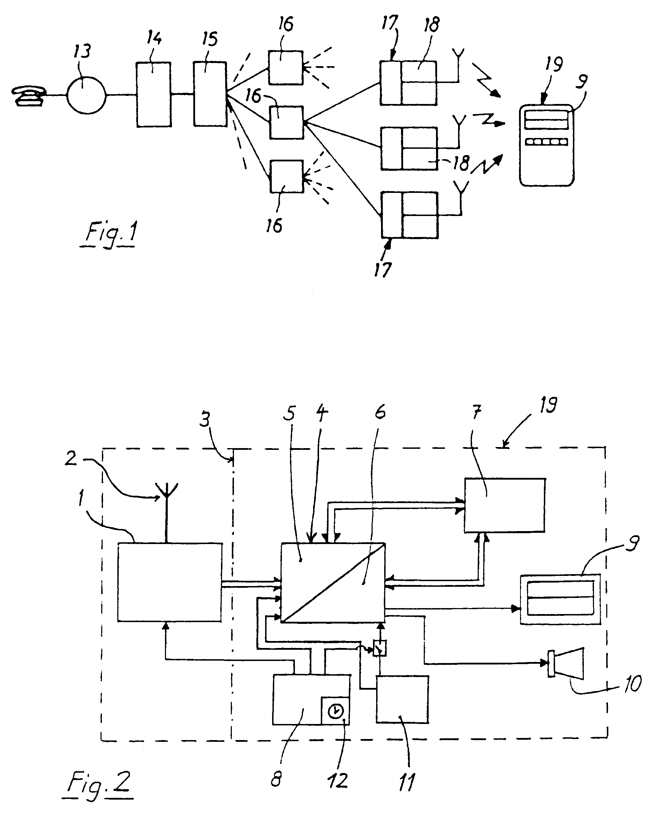

Die Erfindung wird im folgenden am Beispiel eines Personenruf- oder Paging-Netzes beschrieben, ohne indessen darauf beschränkt zu sein. Ein solches Personenrufnetz setzt sich gemäss Fig. 1 aus im wesentlichen folgenden Komponenten zusammen. In einer Funkrufzentrale 14, welche das Verbindungsglied zwischen dem öffentlichen Telefonnetz 13 und dem Personenrufsystem darstellt, werden die Teilnehmerdaten verwaltet und die ankommenden Anrufe in für das Personenrufsystem geeignete, serielle Datenströme, z.B. im sogenannten POCSAG-Format, umgesetzt.

Eine Netzsteuereinheit 15 ist mit der Funkrufzentrale verbunden und sammelt eine bestimmte Anzahl Rufe jeweils in einem Datenpaket. Jedes Datenpaket wird entsprechend kodiert und zur Weitersendung bereitgestellt. Die Rufe werden so für die Aussendung nach ca. 30 Sekunden zwischengespeichert. Die Netzsteuereinheit ist zugleich für die synchrone Aussendung der Funkrufe zuständig. Hierfür versieht sie jeden Funkruf mit einem Zeitstempel, der den Zeitpunkt seiner Aussendung festlegt.

Mehrere örtlich verteilte SendergruppenSteuereinheiten 16 sind mit der Netzsteuereinheit (über Telefonleitungen) verbunden. Diese SendergruppenSteuereinheiten verteilen die Datenpakete, die sie von der Netzsteuereinheit erhalten, auf die eigentlichen Funkrufsender oder Basisstationen.

Die Basisstationen 17, von denen jeweils mehrere (über Telefonleitung) mit einer Sendergruppen-Steuereinheit verbunden sind, stellen das Ende der leitungsgebundenen bzw. den Ausgangspunkt für die Funk-Uebermittlung der Rufe dar. Von den Basisstationen werden die Rufe über Funk an die Empfänger weitergesendet. Sie sind örtlich so verteilt, dass eine möglichst flächendeckende Ausstrahlung der Funkrufe erfolgt. Die Basisstationen besitzen eine Schnittstelle 18, welche zur Zwischenspeicherung der Rufe und zur synchronen Ausstrahlung jedes Rufes gemäss einem Zeitstempel durch den damit verbundenen Sendeempfänger vorgesehen ist.

Die Rufe werden gemäss einem festgelegten Meldungsprotokoll (z.B. gemäss POCSAG) übermittelt, wobei jeder Meldung eine Adresse vorausgeht, welche einem Rufempfangsgerät 19 zugeordnet ist.

Die Rufempfangsgeräte 19 oder "Pager" werden von den Teilnehmern mitgetragen und empfangen die Funkrufe.

Die Rufempfangsgeräte 19 besitzen mehrere Schaltungsteile mit unterschiedlichen Funktionen, die in Fig. 2 schematisch gezeigt sind. Da die Teilnehmer ihr Gerät in der Rocktasche oder am Hosengurt tragen, sind die Rufempfangsgeräte 19 so klein als möglich gebaut und besitzen keine Aussenantenne. Die Empfangsantenne 2 liegt damit notwendigerweise räumlich nahe an einer elektrischen Datenverarbeitungsschaltung 4 und nimmt so die von dieser erzeugten elektromagnetischen Störungen auf. Der Funkempfänger 1 ist damit einem Störrauschen mit relativ hohem Pegel ausgesetzt, was seine Empfangsleistung beeinträchtigt. Diese Störeinflüsse können zwar mit einer Abschirmung 3 etwas reduziert werden, was aber das grundsätzliche Problem nicht zu lösen in der Lage ist.

Aus diesem Grund ist nun vorgesehen, die Datenverarbeitungsschaltung 4 zu unterteilen in einen Datenaufnahmeteil 5 und einen Auswertungsteil 6 für die aufgenommenen Daten. Die Unterteilung kann physisch oder auch innerhalb eines einzigen komplexeren Schaltelements funktionell vorgenommen werden, wobei von Bedeutung ist, dass der Datenaufnahmeteil 5 bei abgeschaltetem Auswertungsteil 6 funktionsfähig bleibt und umgekehrt. Sowohl der Datenaufnahmeteil 5 als auch der Auswerteteil 6 sind mit einem Speicher 7 für die empfangenen Daten verbunden. Eine Steuerschaltung 8, welche mindestens eine Zeitgeberfunktion, d.h. eine Uhr 12 besitzt, steuert den Ablauf von Datenempfang und Verarbeitung. An den Auswertungsteil 6 sind ferner Ausgabeeinheiten, insbesondere eine Anzeigeeinheit 9 und ein Lautsprecher 10 angeschlossen, mittels welchen die ausgewerteten Meldungen an den Teilnehmer ausgegeben werden können. Das ganze Gerät ist batteriebetrieben und mit einem Taktgeber 11 versehen, der auf relativ tiefer Frequenz arbeitet.

In solchen "Paging"-Netzwerken wird eine relativ grosse Datenmenge übermittelt. Davon ist jedes einzelne Empfangsgerät nur an einem geringen Bruchteil interessiert. Das Empfangsgerät hat deshalb alle übermittelten Daten auf eine bestimmte Datensequenz (oder Adresse) hin zu prüfen, welche ihm die jeweils nachfolgenden Daten zuordnet. Hat das Gerät eine solche Datensequenz gefunden, so hat es die nachfolgenden Daten auszuwerten, um festzustellen, ob sie eine auf seiner Anzeige 9 wiederzugebende oder zu speichernde Meldung enthalten oder ob darin irgend welche anderen Funktionsbefehle übermittelt werden.

Gemäss der vorliegenden Erfindung ist diese Datenverarbeitung nun zeitlich in besonderer Weise aufgeteilt zwischen dem Datenaufnahmeteil 5 und dem Auswertungsteil 6 und zwar in Abhängigkeit vom Empfängerbetrieb.

Der Datenaufnahmeteil 5 ist als Decodierer ausgebildet und hat zuerst festzustellen, ob eine dem jeweiligen Gerät zugeordnete Datensequenz (Adresse) empfangen wurde. Seine Funktion besteht darin sicherzustellen, dass die empfangenen Daten nicht alle und dauernd zur Verarbeitung aufgenommen werden, sondern dass die Datenaufnahme ausreichend selektiv erfolgt, womit auch die Lebensdauer der Batterien erhöht werden kann. Die entsprechenden, relativ wenigen Verarbeitungsschritte verursachen keine nennenswerten elektrischen Störungen. Im Auswertungsteil 6, der z.B. als Mikroprozessor ausgebildet sein kann, werden dann die selektiv aufgenommenen Daten auf eventuell darin enthaltenen Meldungen oder andere Eigenschaften analysiert. Zum Beispiel können Uebermittlungsfehler analysiert und so die Meldungen berichtigt werden etc. Die Aktivität des Auswertungsteils 6 (z.B. eines Prozessors) bei der Auswertung der Daten erzeugt vor allem die erwähnten elektrischen Störungen.

Im Empfänger 1 empfangene Daten werden also zunächst vom Datenaufnahmeteil 5 auf entsprechende Adressequenzen überprüft. Sind solche gefunden, werden die nachfolgenden Daten im Speicher 7 gespeichert.

Sind die Daten gespeichert, wird der Empfänger 1 zusammen mit dem Datenaufnahmeteil 5 abgeschaltet. Die Feststellung, ob genügend viele Daten gespeichert sind, kann entweder durch die Detektion einer weiteren festgelegten Datensequenz erfolgen oder ergibt sich nach der Speicherung einer bestimmten Anzahl Daten.

Ist der Empfänger 1 ausgeschaltet, so wird der Auswertungsteil 6 in Betrieb genommen, der die gespeicherten Daten in der beschriebenen Weise analysiert.

Wenn der Empfänger 1 gemäss der zeitlichen Uebermittlungsstruktur durch die Steuerschaltung 8 wieder eingeschaltet werden muss, so wird der Auswertungsteil für die Dauer des Empfangs abgeschaltet.

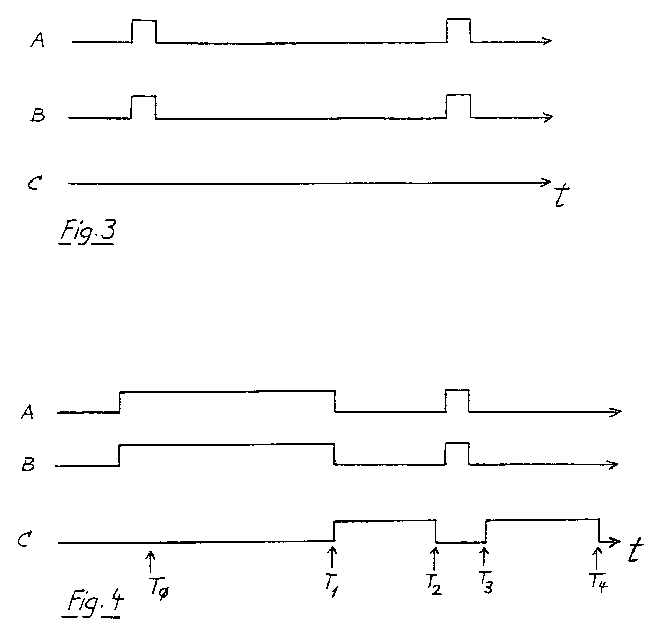

In Figur 3 und 4 sind diese Abläufe in Laufzeitdiagrammen dargestellt, wobei die Zeile A jeweils den Funkempfänger 1, die Zeile B den Datenaufnahmeteil 5 und die Zeile C den Auswertungsteil 6 betrifft.

Figur 3 zeigt die Situation, in welcher der Empfänger 1 (Zeile A) gemäss der zeitlichen Struktur der Uebermittlung periodisch (z.B. alle 30 Sekunden) durch die Steuerschaltung 8 mit Zeitgeber 12 anund abgeschaltet wird, um Batterie zu sparen. Das Gerät kann diese zeitliche Struktur selbst finden und sich so daran anpassen. Zusammen mit dem Empfänger 1 wird jeweils auch der Datenaufnahmeteil 5 ein- und ausgeschaltet (Zeile B). Im vorliegenden Beispiel gemäss Figur 3, findet er jedoch keine das Gerät betreffende Datensequenzen (Adressen), so dass der Auswertungsteil 6 ausgeschaltet bleibt (Zeile C).

In Fig. 4 ist andererseits die Situation dargestellt, wo im Datenaufnahmeteil 5 eine entsprechende Adressequenz festgestellt wurde und die nachfolgenden Daten ab dem Zeitpunkt Tφ im Speicher 7 gespeichert werden. Der Empfänger 1 und der Datenaufnahmeteil 5 bleiben bis zum Meldungsende im Zeitpunkt T₁ eingeschaltet (Zeilen A und B). Erst dann wird der Auswertungsteil 6 eingeschaltet, um die gespeicherten Daten auszuwerten (Zeile C). Ist während dieser Verarbeitung eine weitere Uebermittlung zu erwarten, so wird der Auswertungsteil 6 zum Zeitpunkt T₂ ausgeschaltet, bevor der Empfänger 1 und der Datenaufnahmeteil 5 eingeschaltet werden. Die entsprechenden Zeiten werden vom Zeitgeber 12 in der Steuerschaltung 8 festgelegt. Ist der Empfang beendet, wird zum Zeitpunkt T₃ der Auswertungsteil 6 wieder eingeschaltet und die Datenauswertung aus dem Speicher 7 fortgesetzt, bis sie zum Zeitpunkt T₄ abgeschlossen ist. Auch wenn der Auswertungsteil bei der relativ niedrigen Frequenz des Taktgebers arbeitet, kann so sichergestellt werden, dass das Gerät bei Uebermittlung empfangsbereit ist. Da für ein einzelnes Empfangsgerät die Häufigkeit der empfangenen Meldungen nicht gross ist, bringt eine relativ langsame Auswertung der empfangenen Daten keine Nachteile. Vorteilhaft ist dabei insbesondere der geringere Stromverbrauch des Auswerteteils.

Da die hauptsächlichen elektrischen Störungen durch die Aktivität des Auswertungsteils 6 verursacht werden, ist durch diese zeitliche Staffelung sichergestellt, dass der Empfänger 1 und der Auswertungsteil 6 nie gleichzeitig arbeiten, so dass der Empfang nicht gestört wird. Damit kann im Auswertungsteil 6 eine hohe Effizienz der Datenauswertung erzielt werden, ohne dass dadurch die Signalempfindlichkeit des Empfängers 1 herabgesetzt wird. Der Empfang kann damit wesentlich verbessert werden.

Die Aufteilung der Datenverarbeitungsschaltung 4 in die beschriebenen Teile kann schaltungsmässig erzielt werden, indem entsprechende, separat betreibbare Schaltungsteile vorgesehen sind, die hardwaremässig getrennt sind. Wie für den Fachmann ersichtlich, kann das angestrebte Ergebnis aber auch durch funktionelle Aufteilung in einer einzigen komplexen Schaltung, wie einem Mikroprozessor, erzielt werden, indem auch dort die erzeugten Störungen von den jeweils ausgeführten Operationen abhängen.

## Patentansprüche

1. Empfangsgerät für digitale Funksignale mit einem Funkempfänger (1) und einer damit verbundenen Datenverarbeitungsschaltung (4), die physisch oder funktionell unterteilt ist in einen Datenaufnahmeteil (5) und einen Auswertungsteil (6), wobei der Datenaufnahmeteil (5) für die Prüfung und selektive Speicherung eintreffender Daten in einem Speicher (7), und der Auswertungsteil (6) für die weitere Auswertung der gespeicherten Daten ausgestaltet ist, wobei eine Steuerschaltung (8) vorgesehen ist, mittels welcher der Funkempfänger (1) gemäss einer zeitlichen Uebermittlungsstruktur der Funksignale an- und abschaltbar ist, dadurch gekennzeichnet, dass genau ein Taktgeber (11) vorgesehen ist, um den Auswertungsteil (6) mit einem Taktsignal anzusteuern, und dass der Auswertungsteil (6) bei eingeschaltetem Funkrufempfänger (1) durch Trennung vom Taktgeber (11) ausser Betrieb gesetzt ist und bei eingeschaltetem Funkrufempfänger empfangene Daten vollständig im Speicher (7) zwischenspeicherbar sind.

2. Empfangsgerät nach Anspruch 1, dadurch gekennzeichnet, dass der Funkempfänger (1) und der Datenaufnahmeteil (5) jeweils gemeinsam aktiv sind und der Aufnahmeteil (5) dazu ausgebildet ist, die empfangenen Daten auf Adressequenzen zu prüfen, und die an das betreffende Empfangsgerät adressierten Daten zu speichern.

3. Empfangsgerät nach einem der vorangehenden Ansprüche, dadurch gekennzeichnet, dass der Auswertungsteil (6) dazu ausgebildet ist, die gespeicherten Daten jeweils bei ausser Betrieb gesetztem Funkempfänger (1) auszuwerten und die Verarbeitung bei Inbetriebnahme des Funkempfängers (1) zu unterbrechen.

4. Empfangsgerät nach einem der vorangehenden Ansprüche, wobei die Funksignale gemäss einem Signalprotokoll übermittelt werden, in welchem jeder Meldung jeweils eine Adresse des Zielempfangsgerät (19) vorangeht und ein Meldungsende festgelegt ist, dadurch gekennzeichnet, dass der Aufnahmeteil(5) zur Prüfung der Adressen ausgebildet ist, um bei zutreffender Adresse die nachfolgende Meldung bis zum Meldungsende im Speicher (7) zu speichern.

5. Empfangsgerät nach Anspruch 3, dadurch gekennzeichnet, dass bei festgestelltem Meldungsende der Funkempfänger (1) ausser Betrieb setzbar und der Verarbeitungsteil (6) ausschaltbar ist.

6. Verfahren zum Betrieb eines Empfangsgerätes mit einem Funkempfänger (1) und einer damit verbundenen Datenverarbeitungsschaltung (4) mit Taktgeber (12), die physisch oder funktionell unterteilt ist in einen Datenaufnahmeteil (5) und einen Auswertungsteil (6), wobei im Datenaufnahmeteil (5) eintreffende Daten geprüft und selektiv in einem Speicher (7) gespeichert werden und im Auswertungsteil (6) die gespeicherten Daten weiter ausgewertet werden, wobei eine Steuerschaltung (8) vorgesehen ist, mittels welcher der Funkempfänger (1) gemäss einer zeitlichen Uebermittlungsstruktur der Funksignale an- und abgeschaltet wird, dadurch gekennzeichnet, dass der Auswertungsteil (6) mit einem Taktsignal eines einzigen Taktgebers (11) betrieben wird und dass das Taktsignal des Auswertungsteils bei eingeschaltetem Funkrufempfänger abgeschaltet wird und dass, falls bei eingeschaltetem Funkrufempfänger für das Empfangsgerät bestimmte Daten empfangen werden, diese Daten im Speicher (7) gespeichert werden, nach Abschalten des Funkrufempfängers das Taktsignal des Auswertungsteils wieder eingeschaltet wird und der Auswertungsteil bei abgeschaltetem Funkrufempfänger die Daten dem Speicher (7) zur Auswertung entnimmt.

## Claims

1. Apparatus for receiving and processing digitally transmitted radio signals, having a radio receiver (1), a data processing circuit (4) connected thereto, said data processing circuit being physically or functionally divided into a data receiving section (5) and a data evaluating section (6), wherein said data receiving section (5) comprises means for examining and selectively storing transmitted data in a memory (7), and wherein said data evaluating section (6) is provided for further evaluating selectively stored data from said memory, and further comprising a control circuit (8) for switching on and off said radio receiver (1) in accordance with a timely defined transmission structure of the digital radio signals, characterised in that there is provided exactly one clock (11) for delivering a clock signal to the evaluating section (6), that when the radio receiver (1) is switched on the evaluating section (6) is switched off by separating it from the clock (11), and that all data received whilst the radio receiver is on can be provisionally stored in the memory (7).

2. Receiving apparatus according to claim 1, characterised in that the radio receiver (1) and the data receiving section (5) are activated simultaneously, and that the data receiving section (5) is arranged so as to check the address-sequences of the received data and to store the data intended for the corresponding receiving apparatus.

3. Receiving apparatus according to any preceding claim, characterised in that the evaluating section (6) is arranged so as to exploit the stored data when the radio receiver (1) is switched off and to interrupt said exploitation when the radio receiver (1) is switched on.

4. Receiving apparatus according to any preceding claim, wherein said radio signals are transmitted in a defined code structure, in which each message is preceded by an address assigned to a defined target receiver (19) and an end of message is defined, characterised in that said data receiving section (5) is designed for checking the address and for storing the following message up to the end of message in said memory (7) if the address is appropriate.

5. Receiving apparatus according to claim 3, characterised in that the radio receiver (1) can be turned off and the evaluating section (6) switched off when the end of message is detected.

6. Method for utilising a receiving apparatus having a radio receiver (1) and a data processing circuit (4) connected thereto with an internal clock (12), said data processing circuit being physically or functionally divided into a data receiving section (5) and a data evaluating section (6), wherein said data receiving section (5) comprises means for examining and selectively storing transmitted data in a memory (7), and wherein said data evaluating section (6) is provided for further evaluating selectively stored data from said memory, and further comprising a control circuit (8) for switching on and off said radio receiver (1) in accordance with a timely defined transmission structure of the digital radio signals, characterised in that the evaluating section (6) is driven by the clock signal of a single clock (11), that when the radio receiver is switched on the clock signal of the evaluating section (6) is switched off, that if data intended for the receiving apparatus are received whilst the radio receiver is on, said data are stored in the memory (7), that the clock signal of the evaluating section (6) is switched on again after the radio receiver has been switched off, and that when the radio receiver is switched off the evaluating section retrieves the data from the memory (7) in order to process it.

## Revendications

1. Récepteur de signaux radio digitaux, avec un récepteur radio (1) accouplé à un circuit d'ordinateur (4) divisé soit physiquement soit de façon fonctionnelle en une section réceptrice de données (5) et une section d'exploitation (6), la section réceptrice (5) étant agencée pour l'analyse et la mémorisation sélective des données reçues dans une mémoire (7), la section d'exploitation (6) étant agencée pour l'exploitation ultérieure des données, un circuit de commande (8) étant prévu au moyen duquel le récepteur radio (1) peut être activé et désactivé en fonction d'une structure de transmission des signaux radio, caractérisé en ce qu'il est prévu exactement une horloge (11) pour transmettre un signal horaire à la section d'exploitation (6), en ce que lorsque le récepteur radio (1) est activé la section d'exploitation (6) est désactivée par sa séparation de l'horloge (11), et en ce que toutes les données reçues lorsque le récepteur radio est activé peuvent être entièrement mémorisées de façon provisoire dans la mémoire (7).

2. Récepteur de signaux selon la revendication 1, caractérisé en ce que le récepteur radio (1) et la section réceptrice de données (5) sont activés simultanément, et en ce que la section réceptrice de données (5) est agencée pour vérifier les séquences d'adresses des données reçues et pour mémoriser les données adressées au récepteur de signaux en question.

3. Récepteur de signaux selon une des revendications précédentes, caractérisé en ce que la section d'exploitation (6) est agencée pour exploiter les données mémorisées lorsque le récepteur radio (1) est désactivé et pour interrompre cette exploitation lors d'une activation du récepteur radio (1).

4. Récepteur de signaux selon une des revendications précédentes pour signaux émis suivant un protocole de signaux selon lequel chaque communication est précédée par l'adresse de l'appareil récepteur (19) visé et selon lequel une terminaison de communication est définie, caractérisé en ce que la section réceptrice (5) est agencée pour vérifier les adresses afin de stocker dans la mémoire (7) la communication faisant suite à une adresse appropriée.

5. Récepteur de signaux selon la revendication 3, caractérisé en ce que le récepteur radio (1) peut être débranché et la section d'exploitation (6) désactivée lorsque la terminaison de communication est détectée.

6. Procédé pour la mise en action d'un récepteur avec un récepteur radio (1) accouplé à un circuit d'ordinateur (4) avec une horloge (12), le circuit d'ordinateur étant divisé soit physiquement, soit de façon fonctionnelle en une section réceptrice de données (5) et une section d'exploitation (6), la section réceptrice (5) étant agencée pour l'analyse et la mémorisation sélective des données reçues dans une mémoire (7), la section d'exploitation (6) étant agencée pour l'exploitation ultérieure des données, un circuit de commande (8) étant prévu au moyen duquel le récepteur radio (1) peut être activé et désactivé en fonction d'une structure de transmission des signaux radio, caractérisé en ce que la section d'exploitation (6) fonctionne avec le signal d'horloge d'une seule horloge (11), que le signal d'horloge de la section d'exploitation est interrompu lorsque le récepteur radio est activé, que si des données destinées au récepteur sont reçues lorsque le récepteur radio est activé, ces données sont mémorisées dans la mémoire (7), que le signal d'horloge de la section d'exploitation est à nouveau activé après l'arrêt du récepteur radio, et que la section d'exploitation extrait les données de la mémoire (7) pour leur exploitation lorsque le récepteur radio est désactivé.
